Europäisches Patentamt

**European Patent Office**

**Office européen des brevets**

Veröffentlichungsnummer: **0 297 318**
**A1**

# EUROPÄISCHE PATENTANMELDUNG

Anmeldenummer: **88109162.3**

Int. Cl.⁴ **G11B 7/14**

Anmeldetag: **09.06.88**

Priorität: **26.06.87 DE 3721080**

Veröffentlichungstag der Anmeldung:
**04.01.89 Patentblatt 89/01**

Benannte Vertragsstaaten:
**AT BE CH DE ES FR GB IT LI LU NL SE**

Anmelder: **Deutsche Thomson-Brandt GmbH**
**Hermann-Schwer-Strasse 3 Postfach 1307**
**D-7730 Villingen-Schwenningen(DE)**

Erfinder: **Platte, Hans-Joachim, Dr.**
**Königsberger Weg 22**
**D-3005 Hemmingen 4(DE)**

Verfahren zur Abtastung und zur Herstellung von plattenförmigen optischen Aufzeichnungsträgern sowie plattenförmiger optischer Aufzeichnungsträger.

Verfahren zur Abtastung und zur Herstellung von plattenförmigen optischen Aufzeichnungsträgern. sowie plattenförmiger optischer Aufzeichnungsträger

Herstellung. Platte und Abtastung von doppelseitig aufgebauten CD's bei denen auf einer Seite der CD eine standardisierte Aufzeichnung vorgesehen ist und auf der anderen Seite eine zur standardisierten Aufzeichnung korrelierte Zusatzaufzeichnung. Durch gleichzeitige Abtastung und Zusammenfügung der korrelierten Informationen wird u.a. die Wiedergabe hochauflösender Fernsehbilder möglich.

EP 0 297 318 A1

## Verfahren zur Abtastung und zur Herstellung von plattenförmigen optischen Aufzeichnungsträgern, sowie plattenförmiger optischer Aufzeichnungsträger

Die Erfindung betrifft ein Verfahren nach dem Oberbegriff des Anspruchs 1.

Plattenförmige optische Aufzeichnungsträger sind unter der Bezeichnung CD (Compact Disc) bekannt geworden. welche Informationen auf ihrer Oberfläche in einer Vielzahl von Pit-Spuren enthalten und mittels eines einfallenden Lichtstrahls (Laser) abtastbar sind. Neben CD's für Audiozwecke sind inzwischen auf dem gleichen oder ähnlichen Prinzip beruhende Aufzeichnungsträger geschaffen oder vorgeschlagen worden. die als Datenspeicher für Rechneranwendungen (CD-ROM), als Speicher für Kombinationen von Audiosignalen und Videosignalen (CD-Video) sowie als Speicher von Audiosignalen. Videosignalen sowie Datensignalen für weitere Anwendungen (CD-Interaktiv) dienen. Dabei hat sich herausgestellt. daß die im Rahmen der Normung für CD-Audio verfügbare Datenrate von ca. 1.4 Mbit pro Sekunde nicht allen weiteren Anwendungen gerecht wird

Der Erfindung liegt die Aufgabe zugrunde. ein Verfahren zur Abtastung von optischen Aufzeichnungsträgern zu schaffen. das eine höhere Datenrate ermöglicht.

Diese Aufgabe wird durch die im Anspruch 1 angegebenen Merkmale gelöst. Dabei ergibt sich die Erhöhung der Datenrate aus der Vervielfachung der Datenrate. die durch die einzelnen Abtastungen verfügbar sind. Ein besonderer Vorteil liegt darin. daß die Abtastraten auch stufenweise verändert werden können und so dem jeweiligen Datenbedarf angepaßt werden kön nen. Somit ist eine sehr wirtschaftliche Ausnutzung der Speicherkapazität der optischen Aufzeichnungsträger und der Wiedergabeeinrichtung möglich. Außerdem ist das Verfahren mit Abtasteinrichtungen kompatibel. die nur jeweils eine Abtastung eines plattenförmigen optischen Aufzeichnungsträgers vornehmen.

Die Erfindung betrifft ferner ein Verfahren zur Herstellung von plattenförmigen Aufzeichnungsträgern für die Abtastung von Informationen bei einer höheren Abtastrate mit dem im Anspruch 10 angegebenen Merkmalen.

Schließlich betrifft die Erfindung einen plattenförmigen Aufzeichnungsträger mit den im Anspruch 15 angegebenen Merkmalen.

Weiterbildungen und vorteilhafte Ausführungsformen der Erfindung ergeben sich aus den Ansprüchen. der weiteren Beschreibung und der Zeichnung. die Ausführungsbeispiele zeigt.

In der Zeichnung zeigen:

Fig. 1 ein Verfahren zur Zerlegung eines Signals hoher Datenrate in zwei Datenströme mit verminderter Datenrate. z.B. der bei CD üblichen Standardbitrate von z.B. 1.4 Mbit je Sekunde,

Fig. 2 eine CD mit zwei Speicheroberflächen. von denen eine einen ersten Teil und die andere einen zweiten Teil gemeinsam abtastbarer Informationen enthält und

Fig. 3 eine Schaltung zur Kombination der von den zwei Abtasteinrichtungen gelieferten Signale mit elektronischem Zeitunterschiedausgleich.

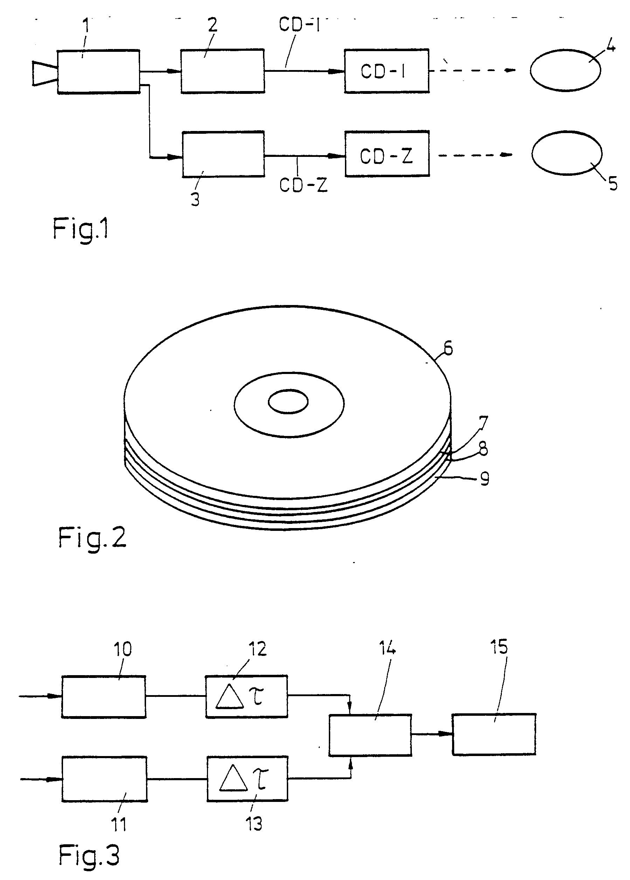

Bei der Aufteilung der Informationen kann entsprechend Fig. 1 vorgegangen werden. Dort ist eine Signalquelle 1. z.B. eine Videokamera oder ein Mikrophon, dargestellt, deren Signalausgang mit einer Schaltung 2 zur Erzeugung eines ersten Datenstromes entsprechend einer vorgegebenen Datenrate verbunden ist. Zusätzlich ist der Signalausgang der oder einer weiteren Ergänzungssignalquelle 1 mit einer weiteren Schaltung 3 zur Erzeugung eines zweiten oder weiteren Datenstroms mit vorzugsweise gleicher Datenrate verbunden. Die in den Datenströmen enthalten Informationen werden nachfolgend auf getrennten optischen Aufzeichnungsträgern 4,5 gespeichert. Durch gleichzeitige Wiedergabe der Signale dieser Aufzeichnungsträger 4.5 mittels zweier Abtasteinrichtungen ist dann die doppelte Datenrate verfügbar.

Fig. 2 zeigt einen Aufzeichnungsträger als eine mögliche Ausführung der Erfindung. indem zwei CD's 4,5 mit ihrem Rücken zusammengefügt wurden. Sie umfassen zwei gegenüberliegende Speicherschichten 7,8 und zwei transparente Schichten 6,9.

Fig. 3 zeigt eine Wiedergabeschaltung mit Abtasteinrichtungen 10 und 11. Sollen korrelierte Signale wiedergegeben werden. so können die abgetasteten Signale bei perfekter Korrelation der zusammengehörenden Signalteile direkt der Wiedergabe zugrundegelegt werden. Die Justierung der Korrelation kann aber auch durch analoge oder digitale Verzögerungsschaltungen 12. 13 vorgenommen und die dann korrelierten Signale direkt oder nach weiterer Verarbeitung in einer Additionsschaltung zur Bildung des Hochqualitätssignals wieder zusammengefügt oder kombiniert und der Wiedergabeschaltung 15 zugeführt werden.

Bei einer Bildspeicherung werden aus einer zu kodierenden Bildszene Signale einfacher CD-I Datenrate entsprechend dem CD-I Standard gewonnen. Gleichzeitig werden aus demselben Quellenmaterial Zusatzsignale bis zur Höhe derselben Zusatzdatenrate gewonnen. die in Kombination mit dem ersten CD-I Signal eine verbesserte Bildqualität, eine verbesserte Tonqualität oder sonstwie verbesserte Abspielbedingungen für den späteren Benutzer erzeugen. Das Zusatzsignal könnte z.B. dasselbe Tonsignal des Hauptsignals im CD-Audio Format enthalten und damit dem Benutzer die Wahl überlassen, ob er das (hier als schlecht angenommene) Tonsignal des Haptsignals oder das bessere Tonsignal des Zusatzkanals abhören will. Das Zusatzsignal könnte alternativ Bildsignale enthalten, die die Auflösung des Hauptbildsignales erhöhen. Das Zusatzbildsignal könnte z.B. im Hauptsignal nicht enthaltene Randpartien enthalten. so daß bei Kombination beider Signale ein Breitbild entstehen würde im Gegnsatz zum normalen 4:3 Fernsehbild der heutigen Norm. Das Zusatzbildsignal könnte ebenso das Bildsignal für ein zweites Auge enthalten. so daß aus der Kombination beider Signale bei Wiedergabe ein dreidimensionaler Bildeindruck entstehen würde. Es ließen sich viele solcher Anwendungen hier aufzählen.

Hauptsignal wie Zusatzsignal werden auf den beiden Oberflächen einer CD-I gespeichert. Zur Wiedergabe wird ein spezielles Abspielgerät angeboten. das über zwei beiderseits der CD-I gleichzeitig betriebene Abtasteinrichtungen (Laser-Pick up) beide Signale parallel lesen kann. Durch eine mechanische Justierung des Drehwinkels der beiden zusammengeklebten Disc-Seiten und einen elektronischen Zeitunterschiedausgleich können beide Signale zeitrichtig zum Ausgangssignal dieses speziellen Abspielgerätes kombiniert werden. Die Disc mit verdoppelter Datenrate ist kompatibel zu Abspielgeräten des CD-I Standards. Denn die eine dann ausschließlich benutzte Seite der Disc ist erfindungsgemäß voll konform mit dem CD-I Standard. Desgleichen ist das Abspielgerät für verdoppelte Datenrate kompatibel mit den Discs nach CD-I Standard. Bei Wiedergabe einer solchen Platte wird selbstverständlich nur die "normale" Qualität des CD-I Standards erreicht

Bei einer abgewandelten Ausführung kann es sich bei den gespeicherten Informationen um Audio- und Videosignalbestandteile eines Videospiels handeln. bei denen der Benutzer Einfluß auf den Spielablauf nehmen kann. Bekannt sind Szenen, in denen vor einem videographierten Hintergrund bewegliche Figuren oder Gegenstände erscheinen. die aus synthetisch erzeugten graphischen Symbolen zusammengesetzt werden.

Derartige Kombinationen lassen jedoch einen realistischen Eindruck vermissen. Der Ersatz solcher graphischen Symbole durch "echte". videographierte Bildbestandteile. die in Abhängigkeit des Spielverlaufs eingeblendet werden. setzt voraus, daß ein extrem schneller Zugriff auf umfangreiche Datenmengen möglich ist. Wenn dies aufgrund zu geringer Datenrate mit einer einzigen Abtasteinrichtung nicht möglich ist, kann dies durch das gleichzeitige Abtasten der benötigten Informationen mit mehreren Abtasteinrichtungen erreicht werden. Die Informationen für das als Beispiel erwähnte Videospiel können so gespeichert werden. daß mit der einen Abtasteinrichtung ein Zugriff auf die den Hintergrund und Steuerbefehle enthaltenden Informationen und mit der anderen oder einer weiteren Abtasteinrichtung ein Zugriff auf die die zusammensetzbaren Bildbestandteile enthaltenden Informationen möglich ist.

Eine Kompatibilität mit Verfahren. die nur eine Abtasteinrichtung verwenden, kann dadurch erreicht werden. daß die Wiedergabe auf die Informationen beschränkt wird, die den Hintergrund und die Steuerbefehle enthalten, und die einzublendenden Bildbestandteile in bekannter Weise mittels der Steuerbefehle synthetisch erzeugt werden.

## Ansprüche

1. Verfahren zur Abtastung von plattenförmigen optischen Aufzeichnungsträgern, dadurch gekennzeichnet. daß auf den Aufzeichnungsträgern gespeicherte Informationen von mehreren Abtastern gleichzeitig abgetastet werden.

2. Verfahren nach Anspruch 1. dadurch gekennzeichnet. daß die Informationen auf derselben Seite gleichzeitig abgetastet werden.

3. Verfahren nach Anspruch 1. dadurch gekennzeichnet. daß die Informationen auf verschiedenen Seiten gleichzeitig abgetastet werden.

4. Verfahren nach Anspruch 1. dadurch gekennzeichnet. daß die Informationen auf mehreren optischen Aufzeichnungsträgern gleichzeitig mit mehreren Abtasteinrichtungen abgetastet und gemeinsam wiedergegeben werden.

5. Verfahren nach einem oder mehreren der Ansprüche 1 bis 4, dadurch gekennzeichnet. daß die gleichzeitig abgetasteten Informationen gemeinsam verarbeitet werden.

6. Verfahren nach Anspruch 5. dadurch gekennzeichnet. daß die gleichzeitig abgetasteten und gemeinsam verarbeite ten Informationen zu Gesamtinformationen zusammengefügt werden.

7. Verfahren nach einem oder mehreren der Ansprüche 1 bis 6. dadurch gekennzeichnet, daß wenigstens einer der Aufzeichnungsträger kompatibel auf standardisierten Wiedergabegeräten abtastbar ist.

8. Verfahren nach einem oder mehreren der Ansprüche 1 bis 7. dadurch gekennzeichnet. daß eines oder mehrere der abgetasteten Signale zwischengespeichert werden und zum Ausgleich eines zeitlichen Versatzes bei der Abtastung unterschiedlich verzögert und anschließend gemeinsam verarbeitet werden.

9. Verfahren nach einem oder mehreren der Ansprüche 1 bis 8. dadurch gekennzeichnet. daß die abgetasteten Informationen vorzugsweise in Kombination einem vorbestimmten Wiedergabezweck genügen.

10. Verfahren zur Herstellung von plattenförmigen optischen Aufzeichnungsträgern. dadurch gekennzeichnet. daß zusammengehörige Informationen hoher Informationsdichte räumlich getrennt gespeichert werden.

11. Verfahren nach Anspruch 10, dadurch gekennzeichnet. daß die Informationen auf derselben Seite gespeichert werden.

12. Verfahren nach Anspruch 10. dadurch gekennzeichnet. daß die Informationen auf verschiedenen Seiten gespeichert werden.

13. Verfahren nach Anspruch 10. dadurch gekennzeichnet. daß die Informationen auf räumlich getrennt handhabbaren Teilen von Aufzeichnungsträgern gespeichert werden.

14. Verfahren nach Anspruch 12. dadurch gekennzeichnet. daß zwei mit den zusammengehörigen Informationen versehenen Teile der Aufzeichnungsträger. welche jeweils nur eine aktive Seite umfassen. an ihren nicht aktiven Seiten zusammengefügt. z.B. zusammengeklebt werden.

15. Verfahren nach einem oder mehreren der Ansprüche 10 bis 14. dadurch gekennzeichnet. daß die aus einem gemeinsamen Ursprung stammenden Informationen so aufgeteilt werden, daß wenigstens einer der Aufzeichnungsträger kompatibel auf standardisierten Wiedergabegeräten abtastbar ist.

16. Plattenförmiger optischer Aufzeichnungsträger. insbesondere CD. dadurch gekennzeichnet. daß zusammengehörige Informationen räumlich getrennt gespeichert sind. ·

17. Aufzeichnungsträger nach Anspruch 16. dadurch gekennzeichnet. daß die Informationen auf derselben Seite gespeichert sind.

18. Aufzeichnungsträger nach Anspruch 16. dadurch gekennzeichnet. daß die Informationen auf verschiedenen Seiten gespeichert sind.

19. Aufzeichnungsträger nach Anspruch 16, dadurch gekennzeichnet, daß die Informationen auf verschiedenen Teilen eines Satzes von Aufzeichnungsträgern gespeichert sind.

20. Verfahren bzw. plattenförmiger Aufzeichnungsträger nach einem oder mehreren der vorangehenden Ansprüche, **dadurch gekennzeichnet**. daß Informationen einerseits mittels sogenannten Pits und andererseits nach dem magneto-optischen Verfahren gespeichert sind.

Fig.1

Fig.2

Fig.3

## EINSCHLÄGIGE DOKUMENTE

EP 88109162.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | EP - A1 - 0 092 420 (XEROX CORPORATION)<br><br>* Fig. 1-3,7; Zusammenfassung *<br><br>-- | 1,2,5, 6,9, 10,11, 16,17 | G 11 B 7/14 |
| X | US - A - 4 298 974 (TSUNODA et al.)<br><br>* Fig. 5,7; Zusammenfassung *<br><br>-- | 1,2,4, 5,6, 10,11, 16,17 | |
| X | PATENT ABSTRACTS OF JAPAN, unexamined applications, Sektion P, Band 6, Nr. 241, 30. November 1982<br><br>THE PATENT OFFICE JAPANESE GOVERNMENT<br>Seite 139 P 158<br><br>* Kokai-Nr. 57-141 032 (HITACHI SEISAKUSHO K.K.) *<br><br>-- | 1,2,4, 5,6, 10,11, 16,17 | |
| X | PATENT ABSTRACTS OF JAPAN, unexamined applications, Sektion P, Band 6, Nr. 262, 21. Dezember 1982<br><br>THE PATENT OFFICE JAPANESE GOVERNMENT<br>Seite 136 P 164<br><br>* Kokai-Nr. 57-158 045 (SANYO DENKI K.K.) *<br><br>---- | 1,2,4, 5,6, 10,11, 16,17 | |

**RECHERCHIERTE SACHGEBIETE (Int. Cl.4)**

G 11 B 7/00

Der vorliegende Recherchenbericht wurde für alle Patentansprüche erstellt.

| Recherchenort | Abschlußdatum der Recherche | Prüfer |
|---|---|---|
| WIEN | 27-09-1988 | BERGER |